# EUROPÄISCHE PATENTANMELDUNG

(11) **EP 1 876 335 A1**
(43) Veröffentlichungstag der Anmeldung: **09.01.2008**
(21) Anmeldenummer: 06405285.5
(22) Anmeldetag: 05.07.2006
(51) Int. Cl.: F02C 6/12, F01D 5/18

(54) **Sekundärluftsystem für Turboladerturbine**

(71) Anmelder: ABB Turbo Systems AG, 5400 Baden (CH)
(72) Erfinder: Schaber, Ulrich, CH-5412 Gebenstorf (CH)
(74) Vertreter: ABB Patent Attorneys

(57) **Zusammenfassung**

Turbine eines Abgasturboladers mit einem Sekundärluftsystem zur Kühlung von Bauteilen (31,32,33) der Turbine, welche Bauteile einer Primärströmung (61) durch die Turbine ausgesetzt sind, wobei die zu kühlenden Bauteile (31,32,33) der Turbine Kühlkanäle (41) aufweisen, durch welche Kühlkanäle (41) Kühlluft als Sekundärströmung (62) leitbar ist.

## Beschreibung

### Technisches Gebiet

Die Erfindung bezieht sich auf das Gebiet der Abgasturbolader für aufgeladene Brennkraftmaschinen. Sie betrifft die Turbine eines Abgasturboladers mit einem Sekundärluftsystem zur Kühlung von Bauteilen der Turbine.

Sekundärluftsysteme von Strömungsmaschinen dienen der Kühlung einzelner Bauteile oder verhindern aufgrund eines geeigneten Druckgefälles einen Einbruch von Heissgasen in Bereiche, welche aus mechanischen, thermischen oder chemischen Gründen vor den Heissgasen getrennt werden müssen.

### Stand der Technik

Sehr verbreitet sind Sekundärluftsysteme im Gebiet der Gasturbinen, bei denen das primäre Strömungsmedium sehr hohe Temperaturen aufweist. Die mit Heissgas beaufschlagten Teile werden mittels Sekundärluft gekühlt, welche beispielsweise im Bereich des Verdichters aus der Hauptströmung abgezweigt wird. Die Kühlung erfolgt durch Prall-, Konvektions- oder Filmkühlung, oder durch eine Kombination dieser Kühlungsarten.

Bei der Prallkühlung wird Kühlluft aus einer Bohrung meist senkrecht und mit hoher Geschwindigkeit auf die zu kühlende Oberfläche geblasen. Beim Aufprall dieses Strahls wird die Kühlluft vom Aufprallpunkt aus nach allen Seiten parallel zur Aufprallfläche umgelenkt. Dabei wird eine hohe Kühlwirkung erzielt, die aber mit grösser werdendem Abstand vom Aufprallpunkt kontinuierlich abnimmt. Um grössere Gebiete auf diese Art effektiv zu kühlen, müssen viele dieser Bohrungen in einer einzelnen Lochreihe oder aber in mehreren Lochreihen angeordnet werden.

Bei der Konvektionskühlung überströmt Kühlluft die zu kühlende Oberfläche wobei eine Temperaturangleichung erfolgt.

Bei der Filmkühlung tritt die Kühlluft durch Bohrungen aus dem jeweiligen Bauteil aus und bildet einen Kühlfilm an der Oberfläche des Bauteils. Der Kühlfilm verhindert den direkten Kontakt eines heissen Fluids mit dem Bauteil, wodurch die Bauteiltemperaturen drastisch gesenkt werden können.

Zudem wird die Sekundärluft wie bereits oben erwähnt als Sperrluft verwendet, um Heissgaseinbrüche zu verhindern oder berührungslose Dichtungen in ihrer Funktion zu unterstützen.

Bei einem Abgasturbolader mit einer Axialturbine durchströmt das heisse Abgas der Brennkraftmaschine (fortan mit Primärströmung bezeichnet) das Gaseintrittsgehäuse und passiert anschliessend die Turbinenstufe, bestehend aus Düsenring und den auf der Turbinenscheibe angeordneten Laufschaufeln. Das Abgas verlässt die Turbine über den Diffusor und das Gasaustrittsgehäuse. Bei hohen Gaseintrittstemperaturen im Bereich über 550 Grad Celsius können folgende Beobachtungen gemacht werden:

Bei Bauteilen, die in direktem Kontakt mit dem heissen Abgas stehen, ergeben sich hohe Bauteiltemperaturen, vor allem im Gaseintrittsgehäuse, im Düsenring, an den Laufschaufeln, an dem radial ausserhalb der Laufschaufeln angeordneten Abdeckring und, in geringerem Masse, am Diffusor.

Durch Heissgaseinbrüche zwischen dem Düsenring und der Turbinenscheibe können in dem im radial inneren Bereich des Gaseintrittsgehäuses gebildeten Kalottenraum ebenfalls hohe Temperaturen entstehen, was wiederum zu einer unerwünschten Temperaturerhöhung der Turbinenscheibe führen kann.

Wenn mit dem Turbolader zusammenarbeitende Brennkraftmaschine mit Schweröl als Brennstoff betrieben wird, können sich oberhalb einer Gaseintrittstemperatur von rund 500 Grad Celsius bereits nach einigen Dutzend Betriebsstunden Ablagerungen auf der Oberfläche des Düsenrings, auf den Laufschaufeln und auf der Innenseite des Abdeckrings bilden. Dadurch verschlechtert sich der Turbinenwirkungsgrad, wodurch die Abgastemperaturen der Brennkraftmaschine noch weiter ansteigen.

Das abgelagerte Material weist eine hohe Härte auf, was wiederum dazu führen kann, dass durch die Ablagerungen auf dem Abdeckring die Spitzen der Laufschaufeln abgeschliffen werden. Auch dies führt zu einer drastischen Verschlechterung des Turbinenwirkungsgrades.

Regelmässiges Reinigen der Turbinenstufe im Betrieb, d.h. bei laufender Brennkraftmaschine, kann helfen, die Ablagerungen zumindest teilweise wieder auszuwaschen, hat aber den Nachteil, dass eine teure Reinigungsvorrichtung benötigt wird, dass während dem Reinigen der Abgasturbolader und damit auch die Brennkraftmaschine in der Regel nicht mit Volllast betrieben werden darf, und dass die mit Reinigungsflüssigkeit beaufschlagten Teile hohen mechanisch-thermischen Belastungen ausgesetzt sind, was sich negativ auf deren Lebensdauer auswirken kann. Dazu kommt, dass dem Problem der sich abschleifenden Laufschaufelspitzen auch mit regelmässigem Waschen nicht entgegengewirkt werden kann, da die Ablagerungen an dem Abdeckring mit Reinigungsflüssigkeit nur ungenügend oder gar nicht entfernt werden können.

Werden Brennkraftmaschinen im Schwerölbetrieb hingegen mit relativ tiefen Abgastemperaturen betrieben, schlagen sich wenig bis keine Ablagerungen im Turbinenbereich des Abgasturboladers nieder, was allgemein auf die geringen Oberflächentemperaturen der der Primärströmung ausgesetzten Bauteile zurückgeführt wird. Siehe dazu auch die beiden Veröffentlichungen "Bunker Fuels", Liquid Minerals Group Inc., zu finden im Internet unter http://www.liquidminerals.com/framebf.htm und "Investigation Results for Combustion Residue of Marine Diesel Engines", Toshikazu Takase, Makoto Yamawaki, et. al., Journal of MESJ, Volume 33, Nr.1, 1998.

Aus WO 2006/005199 A1 ist eine Turbine eines Abgasturboladers mit einem Sekundärluftsystem zur Kühlung der Turbinenscheibe bekannt. Das Sekundärluftsystem weist einen auf den Aussenrand der Turbinenscheibe gerichteten Zuführungskanal auf. Mit der Kühlung im höchstbelasteten Bereich wird die mechanische Festigkeit der Turbinenscheibe erhöht.

### Kurze Darstellung der Erfindung

Die Aufgabe der vorliegenden Erfindung besteht darin, eine Turbine eines Abgasturboladers zu schaffen, welche über längere Zeit ohne Wirkungsgradverlust mit Schweröl betrieben werden kann.

Erfindungsgemäss wird dies mit einer Turbine eines Abgasturboladers gemäss dem unabhängigen Patentanspruch erreicht.

Dabei wird erfindungsgemäss mit Hilfe eines Sekundärluftsystems die Oberflächentemperatur von bestimmten Bauteilen abgesenkt und somit die Ablagerungen, die sich beim Schwerölbetrieb oberhalb einer bestimmten Temperatur auf diesen Bauteilen bilden, vermieden bzw. minimiert.

Erfindungsgemäss kann das Sekundärluftsystem weiter dazu zu benutzt werden, die Strömungsverhältnisse der Primärströmung im Diffusor zu verbessern, indem die Sekundärluft durch Bohrungen oder Schlitze im Diffusor in die wandnahe Grenzschicht der Primärströmung eingeblasen wird. Dies verhindert bzw. minimiert in bestimmten Betriebszuständen des Abgasturboladers die Ablöseneigung der Grenzschicht im Diffusor, was sich in einem erhöhten Druckrückgewinn und damit einem höheren Turbinenwirkungsgrad äussert.

Bei der Kühlung der Bauteile mit Sekundärluft werden nicht nur die Oberflächentemperaturen gesenkt, sondern es treten im gesamten Bauteil tiefere Temperaturen auf, als im ungekühlten Fall. Dies ermöglicht eine grössere Flexibilität bei der Materialwahl für solche Bauteile. Bezüglich Kosten, Bearbeitbarkeit, und Materialverfügbarkeit können sich dadurch wesentliche Vorteile ergeben. Alternativ kann bei unveränderter Materialwahl die Lebensdauer dieser Teile gesteigert werden.

Weitere Vorteile ergeben sich aus den abhängigen Ansprüchen.

### Kurze Beschreibung der Zeichnungen

Folgend ist anhand der Zeichnungen Ausführungsformen der Turbine eines Abgasturboladers mit einem erfindungsgemässen Sekundärluftsystem beschrieben. Hierbei zeigt
- Fig. 1: einen Schnitt durch den turbinenseitigen Teil eines Abgasturboladers mit einer ersten Ausführungsform des erfindungsgemässen Sekundärluftsystems, und
- Fig. 2: einen Schnitt durch den turbinenseitigen Teil eines Abgasturboladers mit einer zweiten Ausführungsform des erfindungsgemässen Sekundärluftsystems.

### Weg zur Ausführung der Erfindung

In den Figuren ist jeweils der turbinenseitige Teil eines Abgasturboladers dargestellt. Bei der dargestellten Turbine handelt es sich um eine axial angeströmte Turbine, eine sogenannte Axialturbine. Die mit den grossen, weissen Pfeilen angedeutete Primärströmung 61 mit von einer Brennkraftmaschine herkommenden, heissen Abgasen wird dabei vom Gaseintrittsgehäuse 21 über die Turbinenstufe mit den Leitschaufeln des Düsenrings 31 und den Laufschaufeln 12 des Turbinenrades hin zum Diffusor 33 des Gasaustrittsgehäuse geführt. Die Laufschaufeln 12 sind auf der Turbinenscheibe 11 angeordnet, welche um die Turbinenachse 13 rotierbar gelagert ist. Mit der Turbinenscheibe verbunden ist im Fall des Abgasturboladers ein Verdichterrad, oder im Fall einer Nutzturbine ein Generator oder ein Befestigungsflansch für ein mechanische Nutzmaschine. Im radial inneren Bereich umfasst das Gaseintrittsgehäuse ein Kalottengehäuse 22, welches einen Kalottenraum 23 umschliesst. Der Strömungskanal für die Primärströmung wird durch die Gehäuseteile des Gaseintrittsgehäuse 21 und dem Kalottengehäuse, sowie weiter in Strömungsrichtung durch die radial innen und radial aussen die Leitschaufeln tragenden Wandteile des Düsenrings 31, durch den radial ausserhalb der Laufschaufeln angeordneten Abdeckring 32 sowie den Diffusor 33 gebildet.

Erfindungsgemäss weist die Turbine ein Sekundärluftsystem auf, welches zur Kühlung gewisser Bauteile der Turbine vorgesehen ist. Die Wege der Kühlluftströmung, der Sekundärströmung 62, sind mit kleinen weissen Pfeilen angedeutet. Die Kühlluft kann entweder am Austritt des Verdichters oder nach dem Ladeluftkühler des Motors der Verdichterluft entnommen werden oder über eine externe Quelle eingespeist werden.

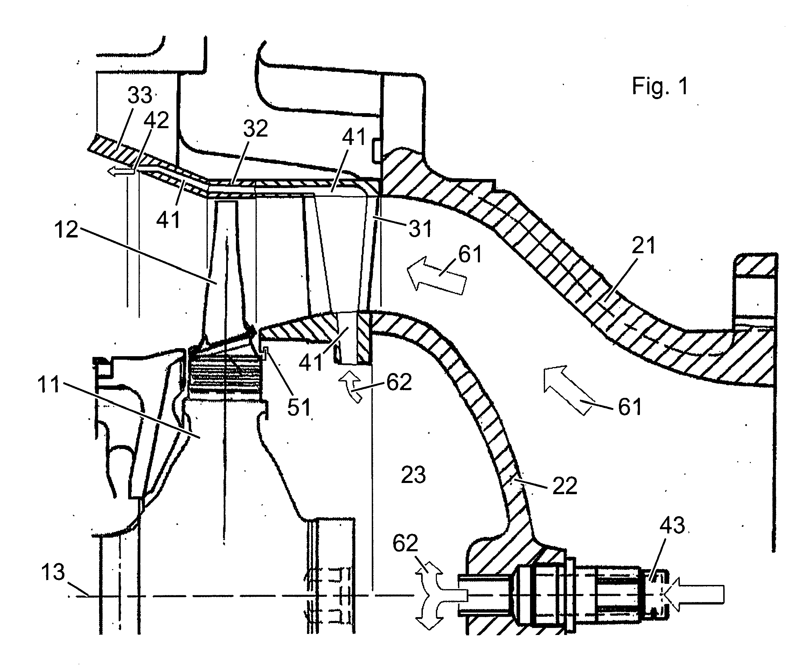

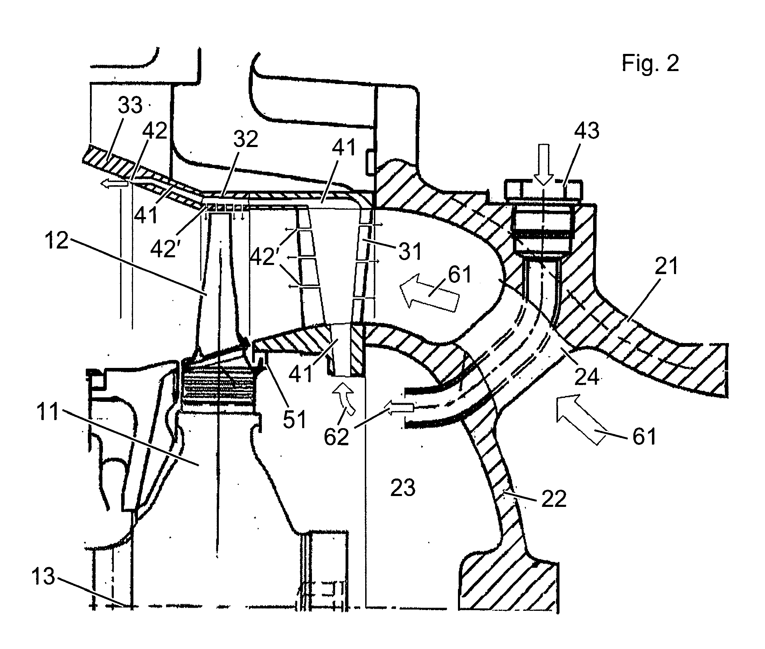

In der in Fig. 1 dargestellten, ersten Ausführungsform umfasst das Sekundärluftsystem eine Sekundärluftzufuhr 43. Die Zuführung kann im radial inneren Bereich angeordnet sein, oder, wie in Fig. 2 dargestellt, durch eine Gehäuserippe 24 geführt sein, welche den Strömungskanal zwischen dem Gaseintrittsgehäuse 21 und dem Kalottengehäuse 21 durchquert. Die Kühlluft strömt von der Sekundärluftzufuhr 43 in einen Sammelraum, den Kalottenraum 23. Eine berührungslose Dichtung 51 zwischen dem Düsenring 31 und der Turbinenscheibe 11 verhindert bzw. minimiert je nach Druckgefälle einen Heissgaseinbruch der Primärströmung 61 in den Kalottenraum 23 oder den Verlust (Leckage) von Kühlluft in die Primärströmung.

Die Kombination der Dichtung 51 mit dem mit Kühlluft gespülten Kalottenraum 23 führt zu tieferen Materialtemperaturen der Turbinenscheibe 11. Ist der Wärmetausch mit der Turbinenscheibe nicht erwünscht, kann der Kalottenraum mittels einer Einsatzwand von der Turbinenscheibe getrennt werden.

Erfindungsgemäss weist der Düsenring 31 einen zum Kalottenraum 23 hin geöffneten Kühlkanal 41 auf. Der dem Kalottenraum entspringende Kühlkanal führt durch das Innere der Leitschaufeln in die radial äusseren Wandteile des Düsenrings. Die Sekundärströmung durchströmt jede einzelne Düsenringschaufel. Eine maximale Absenkung der Oberflächentemperatur der Düsenringschaufeln wird durch eine optimierte Gestaltung der Strömungskanäle für die Kühlluft erreicht, indem beispielsweise die inneren Oberflächen durch Rippen oder Finnen vergrössert werden.

In dem an den Düsenring angrenzenden Abdeckring 23 sowie dem an den Abdeckring angrenzenden Diffusor ist der Kühlkanal 41 fortgeführt.

Nach Durchströmen des Düsenrings 31 gelangt die Sekundärluft zum Abdeckring 32, welcher an den Düsenring angrenzt und in welchem der Kühlkanal 41 fortgeführt ist. Die Kühlluft strömt durch mehrere, axial gerichtete Bohrungen oder Hohlräume des Abdeckrings. Diese Bohrungen oder Hohlräume sind auf dem gesamten Umfang des Abdeckrings 32 angeordnet. Wiederum wird eine maximale Absenkung der Oberflächentemperatur des Abdeckrings wird durch eine optimierte Gestaltung der Strömungskanäle für die Kühlluft erreicht, indem beispielsweise die inneren Oberflächen durch Rippen oder Finnen vergrössert werden. Eine Abdichtung zwischen dem Düsenring 31 und dem Abdeckring 32 verhindert Leckagen der Sekundärströmung.

Nach Durchströmen des Düsenrings 31 gelangt die Sekundärluft zum Diffusor 33, welcher an den Abdeckring angrenzt und in welchem der Kühlkanal 41 fortgeführt ist. Die Kühlluft strömt durch mehrere axiale Bohrungen oder Hohlräume des Diffusors 33. Diese Bohrungen oder Hohlräume sind auf dem gesamten Umfang des Diffusors 33 angeordnet. Eine maximale Absenkung der Oberflächentemperatur des Diffusors 33 wird wiederum durch eine optimierte Gestaltung der Strömungskanäle für die Sekundärluft erreicht, indem beispielsweise die inneren Oberflächen durch Rippen oder Finnen vergrössert werden. Eine Abdichtung zwischen dem Abdeckring 32 und dem Diffusor 33 verhindert Leckagen der Sekundärströmung.

Die Bauteile Düsenring 31 und Abdeckring 32, oder Abdeckring 32 und Diffusor 33, oder Düsenring 31, Abdeckring 32 und Diffusor 33 können auch integral als ein einziges Bauteil ausgeführt sein. Am Prinzip des vorgestellten Sekundärluftsystems ändert das nichts.

Vorteilhafterweise wird die Kühlluft, nach dem Durchströmen von Düsenring, Abdeckring und Diffusor im Diffusor gezielt mit der Primärströmung 62 zusammengeführt. Dies erfolgt so, dass der Wirkungsgrad des Diffusors bzw. dessen Druckrückgewinn gesteigert wird, indem durch eine schlitzförmige Gestaltung der Austrittsöffnung 42 die Kühlluft derart in die Primärströmung geführt wird, dass die Strömungsgrenzschicht der Primärströmung 62 positiv beeinflusst wird. Unter einer positiven Beeinflussung der Strömungsgrenzschicht wird dabei verstanden, dass der Ablöseneigung der Grenzschicht der Strömung an der Wand des Strömungskanals, die bei jeder Diffusorströmung auftritt, entgegengewirkt werden kann.

Alternativ kann die Kühlluft auch im Sinne eines geschlossenen Kreislaufs über einen Kühler dem Kalottenraum zugeführt werden.

Nachdem die Bauteile Düsenring 31, Abdeckring 32 und Diffusor 33 gemäss der ersten Ausführungsform von Kühlluft durchströmt und je nach konstruktiver Ausführung der Kühlkanalgeometrie entweder durch konvektive Kühlung oder Prallkühlung oder durch eine Kombination der beiden Kühlungsarten gekühlt werden, kommt in der anhand von Fig. 2 vorgestellten zweiten Ausführungsform die Filmkühlung als zusätzliche Kühlungsart hinzu.

Die Kühlluft tritt dabei durch zusätzliche Austrittsöffnungen 42' in Form kleiner Bohrungen aus dem jeweiligen Bauteil aus und bildet einen Kühlfilm an der Oberfläche des Bauteils. Der Kühlfilm verhindert den direkten Kontakt der Primärströmung mit dem Bauteil, wodurch die Bauteiltemperaturen drastisch gesenkt werden können. In der Zeichnung sind die zusätzlichen Austrittsöffnungen 42' lediglich in den Leitschaufeln des Düsenrings sowie in dem Abdeckring vorgesehen.

Die Austrittsöffnungen 42' können im Bereich der Oberfläche des zu kühlenden Bauteils geneigt düsenförmig ausgebildet sein, um ein Ausströmen der Kühlluft entlang der Oberfläche zu ermöglichen.

Die zusätzlichen Austrittsöffnungen für die Filmkühlung können jedoch auch in weiteren Bauteilen, etwa in den Wandteilen des Düsenrings oder in dem Diffusor vorgesehen sein.

Während die beiden Ausführungsformen für Axialturbinen beschrieben worden sind, können auch Mixedflow- oder Radialturbinen erfindungsgemäss mit Kühlluft durchströmte Bauteile aufweisen. Anstelle des Kalottenraumes treten in diesem Falle umlaufend ausgebildete Hohlräume im Bereich des Düsenrings.

### Bezugszeichenliste

- 11: Turbinenscheibe
- 12: Laufschaufeln
- 13: Turbinenachse
- 21: Gaseintrittsgehäuse
- 22: Kalottengehäuse
- 23: Kalottenraum, Sammelraum
- 24: Gehäuserippe
- 31: Düsenring
- 32: Abdeckring
- 33: Diffusor
- 41: Kühlkanal
- 42: Austrittsöffnung
- 42': Austrittsöffnungen für Filmkühlung
- 43: Sekundärluftzuführung
- 51: Dichtung
- 61: Primärströmung
- 62: Sekundärströmung

## Patentansprüche

1. Turbine eines Abgasturboladers mit einem Sekundärluftsystem zur Kühlung von Bauteilen (31, 32, 33) der Turbine, welche Bauteile einer Primärströmung (61) durch die Turbine ausgesetzt sind, **dadurch gekennzeichnet, dass** die zu kühlenden Bauteile (31, 32, 33) der Turbine Kühlkanäle (41) aufweisen, durch welche Kühlkanäle (41) Kühlluft als Sekundärströmung (62) leitbar ist.

2. Turbine nach Anspruch 1, **dadurch gekennzeichnet, dass** das Sekundärluftsystem einen Sammelraum (23) umfasst, und dass die Kühlkanäle (41) dem Sammelraum (23) entspringen.

3. Turbine nach einem der Ansprüche 1 oder 2, **dadurch gekennzeichnet, dass** die Turbine eine Turbinenscheibe (11) mit Laufschaufeln (12) sowie einen Düsenring (31) mit Leitschaufeln als zu kühlendes Bauteil umfasst, und dass in die Leitschaufeln des Düsenrings Kühlkanäle (41) eingelassen sind.

4. Turbine nach einem der Ansprüche 1 bis 3, **dadurch gekennzeichnet, dass** die Turbine eine Turbinenscheibe (11) mit Laufschaufeln (12) sowie einen radial ausserhalb der Laufschaufeln angeordneten Abdeckring (32) als zu kühlendes Bauteil umfasst, und dass in den Abdeckring Kühlkanäle (41) eingelassen sind.

5. Turbine nach einem der Ansprüche 1 bis 4, **dadurch gekennzeichnet, dass** die Turbine eine Turbinenscheibe (11) mit Laufschaufeln (12) sowie einen an den Bereich radial ausserhalb der Laufschaufeln angrenzend angeordneten Diffusor (33) als zu kühlendes Bauteil umfasst, und dass in den Diffusor Kühlkanäle (41) eingelassen sind.

6. Turbine nach einem der Ansprüche 1 bis 5, **dadurch gekennzeichnet, dass** in ein zu kühlendes Bauteil (31, 32, 33) in den Kühlkanal (41) mündende Öffnungen (42, 42') eingelassen sind, welche den Kühlkanal (41) durch das zu kühlende Bauteil mit der der Primärströmung (62) durch die Turbine ausgesetzten Oberfläche des zu kühlenden Bauteils (31, 32, 33) verbindet.

7. Turbine nach Anspruch 6, **dadurch gekennzeichnet, dass** die Öffnungen (42, 42') zur Oberfläche des zu kühlenden Bauteils (31, 32, 33) hin zur Oberfläche hin geneigt und düsenförmig ausgebildet sind.

8. Turbine nach einem der Ansprüche 1 bis 7, **dadurch gekennzeichnet, dass** eine Sekundärluftzuführung (43) vorgesehen ist, durch welche die Kühlluft dem Sekundärluftsystem zugeführt werden kann.

9. Turbine nach Anspruch 8, **dadurch gekennzeichnet, dass** die Sekundärluftzuführung (43) durch eine die Primärströmung durchquerende Gehäuserippe (32) geführt ist.

10. Abgasturbolader, **gekennzeichnet durch** einen Turbine mit einem Sekundärluftsystem zur Kühlung von Bauteilen (31, 32, 33) der Turbine gemäss einem der Ansprüche 1 bis 9.
